# EUROPEAN PATENT APPLICATION

(11) **EP 3 950 636 A1**
(43) Date of publication of application: **09.02.2022**
(21) Application number: 20202725.6
(22) Date of filing: 20.10.2020
(51) Int. Cl.: C04B 28/00

(54) **ALKALI-ACTIVATED LIGHTWEIGHT COMPOSITES BASED ON ALKALI-ACTIVATED FOAMS AND MANUFACTURING PROCESS**

(30) Priority: 06.08.2020 SI 202000134; 25.09.2020 SI 202000167
(71) Applicant: Zavod za Gradbenistvo Slovenije, 1000 Ljubljana (SI)
(72) Inventor: DUCMAN, Vilma, 1000 Ljubljana (SI); CESNOVAR, Mark, 1356 Dobrova (SI); TRAVEN, Katja, 4205 Preddvor (SI)
(74) Representative: Jersan, Tatjana

(57) **Abstract**

The invention relates to alkali-activated lightweight composites based on alkali-activated foams with the addition of lightweight aggregates and to a manufacturing process thereof using waste materials such as slag and fly-ash as precursors. These composites are non-combustible and dimensionally stable. To achieve lower densities and thus better insulation properties, while ensuring sufficient mechanical strength, various lightweight aggregates are added to the composites, such as expanded clay, foamed glass, perlite, thus achieving a lower density of composites and consequently improving their insulating properties. Said composites are preferably used as an insulating material that is resistant also at elevated temperatures.

## Description

### The technical field to which the invention belongs

The invention relates to alkali-activated lightweight composites based on alkali-activated foams with the addition of light aggregates and to a manufacturing process using waste materials such as slag and fly-ash as precursors. These composites are one of the most promising materials with higher added value, as they are non-combustible and dimensionally stable. In order to achieve lower densities and thus better insulation, while ensuring sufficient mechanical strength, various lightweight aggregates were added to the composites, such as expanded clay, foamed glass, perlite. With achieved lower density of composites consequently, also their insulating properties were improved.

The composites are preferably used as an insulating material that is resistant even at elevated temperatures and are used as conventional building insulation elements, as a filler in prefabricated houses, as a filler in fire-resistant doors and partitions, as a filler in noise barriers, as a tunnel lining, lining for industrial devices.

### State of the art and technical problem

Construction materials for manufacturing such as concrete, steel, and wood when exposed to high concentrations of thermal energy released during a fire, usually lose most of their strength and thus the load-bearing capacity, which is no longer sufficient for the prescribed mechanical loads, and thus the building is no longer safe. To prevent the weakening of construction materials, there are several types of coatings for fire protection on the market, such as nitrogen and phosphorus-based compounds as well as Al and Mg minerals. Mentioned coatings are applied directly to the construction material. Furthermore, there are also heat-protective panels and combinations of both on the market, such as mineral wool surrounded by an aluminum sheath coated with a protective coating. Such elements prevent both combustion and heat radiation and thus protect the structure of the basic material from damage. Coatings designed to inhibit fire have the disadvantage of reacting and releasing toxic substances during combustion, or they are not permanent and thus intended only for a single exposure to elevated temperatures and need to be replaced after a fire. Aluminosilicates are known refractory materials that are a fundamental part of traditional and technical ceramics. However, due to their complexity of production, especially the need for high-temperature sintering or firing in the form of classical ceramics and high density and thus good thermal conductivity, they have not been originally intended for the manufacture of thermal and refractory protection.

With the alkali-activation process, the solidification of aluminosilicates was reduced to room temperature and the foaming process was developed to the point that a low-density material could be produced, with improved thermal insulation properties.

Gao *et. al.* reported on the preparation of foamed thermal insulation material by the alkali-activation process with the use of sodium silicate and unexpanded ground waste perlite and rock wool. Optimized foams have the following characteristics: low thermal conductivity (0.040-0.060 W·m⁻¹·K⁻¹) and low density (0.1-0.2 g·cm⁻³). The material achieves compressive strengths in the range between 0.09 to 0.6 MPa (H. Gao *et. al.,* Energy & Buildings, 2019).

A similar material with a density of 0.46 g·cm⁻³, the thermal conductivity of 0.084 W·m⁻¹·K^{-1,} and compressive strength of 1.6 MPa was produced by Papa *et al.* using expanded perlite and potassium silicate (E. Papa et. al., Construction and Building Materials, 2018).

By using expanded recycled glass, ceramic microspheres, and expanded perlite, Nematollahi and colleagues prepared geopolymer composites with densities between 1.58-1.83 g·cm⁻³, compressive strengths between 43.4-56.8 MPa, and thermal conductivity in the range of 1.84-0.93 W·m⁻¹·K⁻¹ (B. Nematollahi et. al., Archives of Civil and Mechanical Engineering, 2017).

In a patent SI23340, a temperature-resistant aggregate made of black slag and a process for its production is described. The aggregate is used for the preparation of composite refractory materials which is temperature inert and retains its mechanical, chemical, and mineral characteristics up to a temperature of 1000 °C.

In all the above-mentioned cases, a non-foaming matrix was made to which various aggregates were added.

Duan *et. al.* reported on the preparation of foamed geopolymer composites prepared from metakaolin by the process of alkali-activation using sodium silicate and with the addition of polystyrene particles (P. Duan, et. al., Ceramics International, 2017).

From the state of the art, the applicant is not aware of composite materials that would include alkali-activated foamed waste material such as fly-ash and/or slag, with the new composite material exhibiting good compressive strength, low density, and improved thermal insulation.

### Description of the solution to the technical problem

The described technical problem is solved with a composite material according to the invention, which is made from a combination of alkali-activated foams based on slag and/or fly-ash as a precursor, with the addition of granules of foamed glass, expanded clay, and expanded mineral perlite. The new composite material that contains inorganic granules is a refractory material according to the A1 classification and has good compressive strength, low density, and improved thermal insulation.

The invention will be described below and presented in the figures showing:

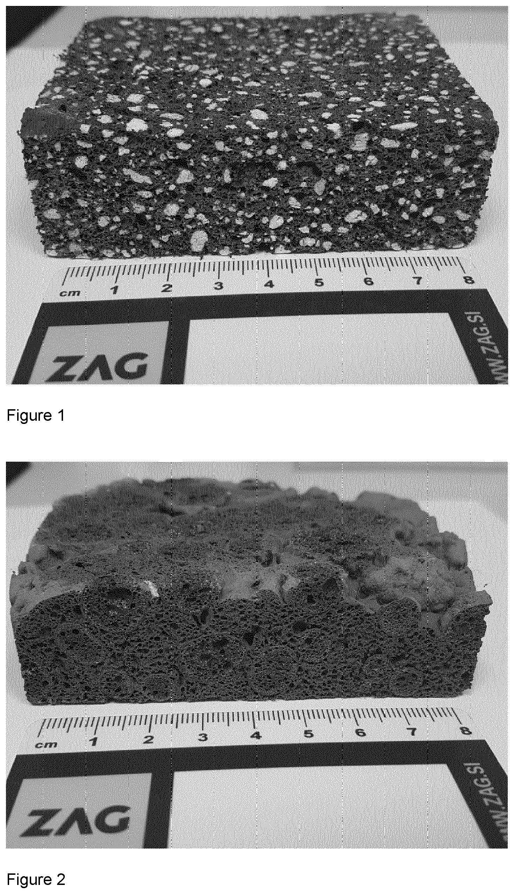

Figure 1 shows a sample of alkali-activated foam with slag as a precursor containing perlite
Figure 2 shows a sample of alkali-activated foam with fly-ash as a precursor containing expanded clay
Figure 3 shows a sample of alkali-activated foam with slag as a precursor containing expanded glass
Figure 4 shows the dependence of thermal conductivity on density for samples FA+EG+H; FA+EG+H+PP; Ž+EG+H; Ž+EG+H+PP, containing expanded clay
Figure 5 shows the mechanical strengths of some implementation examples
Figure 6 shows the XRD diffractogram of slag A
Figure 7 shows the XRD diffractogram of slag R
Figure 8 shows the XRD diffractogram of fly-ash

Alkali-activated lightweight composites of the invention comprising:
- 45-60 mass % of a precursor, with a particle size below 90 µm, wherein the precursor is selected from fly-ash or slag or a combination of both, preferably comprising as much Si and Al in the amorphous phase as possible
- 15-33 mass % of water glass
- 2-4 mass % of NaOH
- 0.5-1.5 mass % of a foaming agent based on active oxygen
- 0.5-1.5 mass % of a surfactant-based stabilizing agent
- 5-50 mass % of a lightweight aggregate with granulation up to 4 mm.

Preferably, the fly-ash is waste obtained from coal combustion.

Preferably, the slag is waste obtained from the processing of iron in an electric arc furnace.

Preferably, the fly-ash and slag are mixed in a weight ratio of 1:1.

Preferably, the fly-ash and slag comprise as much Si and Al in the amorphous phase as possible, that is as much SiO₂ and Al₂O₃ as possible. Preferably, the fly-ash comprises at least 40 mass % of Si and at least 20 mass % of Al (both in the amorphous phase), and the slag comprises at least 10 mass % of Si and at least 5 mass % of Al (both in the amorphous phase). Namely, only Si and Al, which are in the amorphous phase, can enter into the reaction (highly crystalline SiO₂ and Al₂O₃ cannot be alkali-activated).

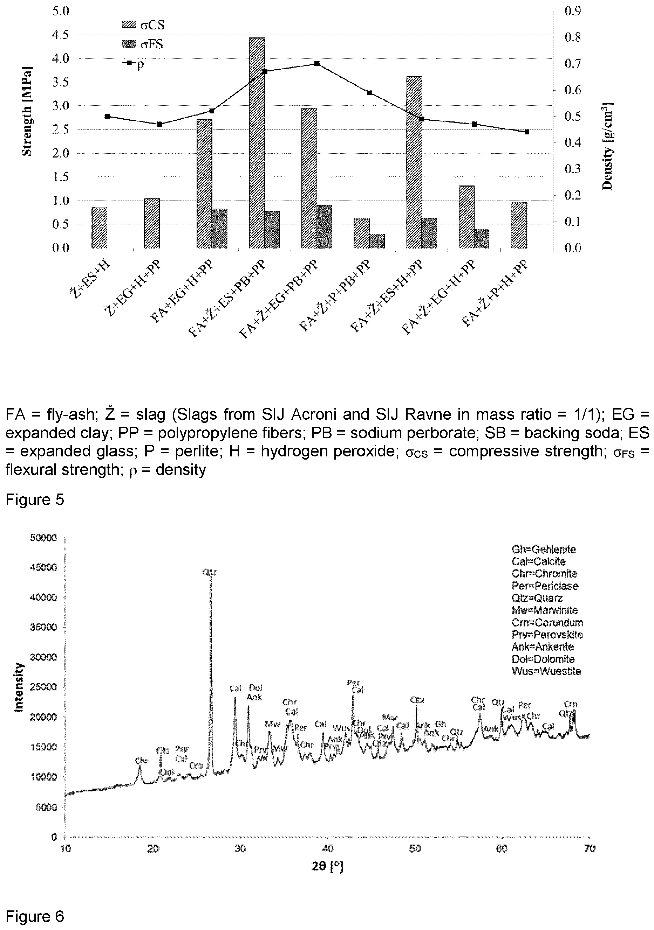

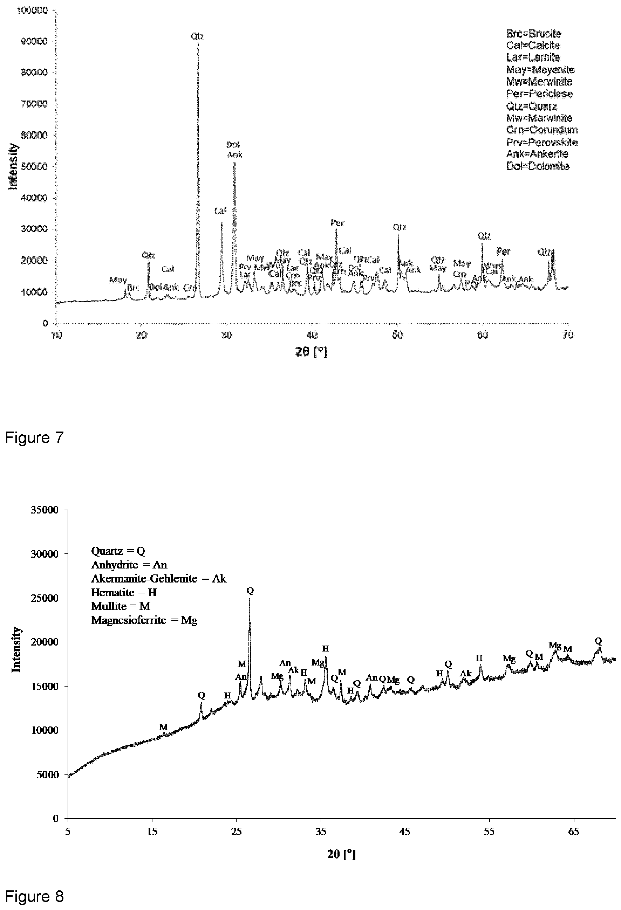

Examples of the chemical composition of suitable precursors are collected in Table 1, where slag A is from SIJ Acroni and slag R from SIJ Ravne, and Figures 6 to 8 show their XRD diffractograms, where the shape of the diffractograms shows that the amorphous phase is also present.

**Table 1: Chemical composition of the precursors**

| Element [mass %] | SiO₂ | Al₂O₃ | Fe₂O₃ | CaO | MgO | Na₂O | K₂O | Cr₂O₃ | MnO | LOI (loss on ignition) | OTH (other oxides) |
|---|---|---|---|---|---|---|---|---|---|---|---|
| Slag A | 21.05 | 8.54 | 11.37 | 20.87 | 14.87 | 0.13 | 0.17 | 3.76 | 2.24 | 14.15 | 2.80 |
| Slag R | 13.69 | 5.20 | 4.64 | 27.85 | 23.25 | 0.28 | 0.14 | 0.18 | 0.62 | 20.47 | 4.43 |
| Fly-ash | 44.82 | 22.98 | 10.65 | 12.38 | 2.80 | 1.19 | 2.20 | 0.02 | 0.26 | 0.51 | 2.68 |

Water glass is potassium water glass with a dry matter content of up to 55 mass % or sodium water glass also with a dry matter content of up to 55 mass %.

Preferably, the foaming agent is selected from H₂O₂ in the form of a 30 % aqueous solution, sodium perborate in a solid form, and/or baking soda in a solid form. The function of the foaming agent is to decompose or to react with other components in such a way that gases are formed that remain trapped in the structure.

Preferably, the stabilizing agent is selected from anionic surfactants, for example, sodium dodecyl sulfate in solid form, or nonionic surfactants, for example, triton in liquid form. The stabilizing agent lowers the surface energy and thus makes the foam or bubble membranes more stable, thus preventing the foam from collapsing.

Lightweight aggregates should have a high porosity, whereby a closed-cell structure is preferable so that the pores are not filled with an alkali-activated mixture. For achieving better thermal insulation properties finely porous material should be chosen. Preferably, the lightweight aggregates are selected from the group consisting of perlite, expanded clay, or expanded glass.

Optionally, alkali-activated lightweight composites are additionally hardened with the addition of 0.1 to 1 mass % of fibers such as PP (polypropylene fibers), PVA (polyvinyl alcohol fibers), Basalt.

**Table 2: Description of the various fibers suitable for the composite.**

| **Fibres type** | Average length (mm) | Density (g·cm⁻³) |
|---|---|---|
| PP | 11 | 0.94 |
| PVA | 12 | 1.19 |
| Basalt | 7 | 3.0 |

Preferably, the fibers are polypropylene fibers with an average length of 11 mm and a density of 0.94 g/cm³. The function of the added fibers is to improve the mechanical strength, especially toughness, which is indirectly expressed through improved flexural strength.

The manufacturing process for alkali-activated lightweight composites based on alkali-activated foams using at least the following ingredients precursor, water glass, NaOH, foaming agent, and stabilizer.

The manufacturing process comprising the following steps:
a) preparing a dry mixture, wherein the dry mixture includes at least one precursor and wherein the individual components are mixed together in a dry manner to obtain as homogeneous mixture as possible;
b) alkali-activation and stirring to obtain as homogeneous mixture as possible, wherein the alkali-activation involves the addition of said dry mixture to water glass and NaOH and the reaction of dissolving aluminosilicates in alkalis begins followed by redistribution of Si and Al atoms in 2D or 3D network with polycondensation, which is finally cured later in step f) of drying;
c) foaming and homogenizing the mixture, wherein in this step the mixture includes a precursor, water glass, NaOH, foaming agent, and stabilizer and wherein at that point the foaming agent starts to decompose and the gases, also due to the stabilizing agent activity, remain trapped in the structure, and a foaming paste is formed, that is a foam matrix with built-in gas pores;
d) adding a lightweight aggregate to the foam paste until the entire aggregate is surrounded by the paste, to obtain a final mixture;
e) the casting of the final mixture into the moulds and
f) drying for 2 to 4 days, at a temperature between 60 and 80 °C, and relative humidity between 10 to 60 %.

When slag is used as a precursor, it may be pre-grinded and sieved to obtain particle size below 90 µm. When fly-ash is used as a precursor, pre-grinding is not necessary, as the particles are already of appropriate size.

When sodium dodecyl sulphate is used as a stabilizing agent, which is solid, it can be added to the dry components, that is in the step a) of preparing the dry mixture.

When a sodium perborate and/or baking soda are used as a foaming agent, both of which are solid and decompose or react more slowly, they can be added to the dry components, that is in the step a) of preparing the dry mixture, wherein in this case step b) of alkali-activation and step c) of foaming and homogenizing the mixture take place simultaneously.

When hydrogen peroxide is used as a foaming agent, step c) of foaming and homogenizing the mixture is carried out for a maximum of five minutes, for example in a stirrer at 120 rpm. After that time many pores could collapse and the peroxide could react or decompose.

Preferably, thus prepared lightweight composite is dried for three days at 70 °C and relative humidity between 20 to 40 %. During this time, the material develops strength under the influence of chemical reactions and is suitable for further research such as microstructure investigation, measurement of mechanical properties, measurement of thermal conductivity, etc.

The process from step b) of alkali-activation to step e) of casting the final mixture into the moulds takes a maximum of 10 minutes.

When the composites according to the invention also include fibers, the fibers are added to the dry components that is in the step a) of preparing the dry mixture.

### Implementation examples

Following the above-described procedure, twelve samples of alkali-activated foam were prepared with the compositions defined in Table 3.

The following materials were used:
- precursors - fly-ash (TEŠ) or slag (SIJ Acroni and SIJ Ravne); fly-ash can be used as received, while slag must be pre-grinded and sieved below 90 µm
- water glass - sodium water glass: Crystal 0112 by Tennants distribution, Ltd., SiO₂:Na₂O = 1.97 mass %; 54.2 mass % aqueous solution.
- NaOH in solid form (Donau Chemie)
- foaming agent - sodium perborate in solid form (Belinka Perkemija) or hydrogen peroxide - liquid (Belinka Perkemija) or baking soda
- stabilizing agent - triton - liquid; Triton^{™} X-100 (Merck)
- fibers - polypropylene fibers with an average length of 11 mm and density 0.94 g/cm³
- lightweight aggregate/granules - perlite (Njiva d.o.o.), expanded clay, expanded glass (Glasopor AS)

**Table 3: Compositions of implementation samples.**

| **Sample designation** | **FA [g]** | **Ž [g]** | **Na₂SiO₃ [g]** | **NaOH / s [g]** | **T / I [g]** | **foaming agent [g]** | **PP [g]** | **lightweight aggregate [g]** |
|---|---|---|---|---|---|---|---|---|
| FA+EG+H | 110 | / | 37.4 | 4.0 | 1.5 | 1.5 | / | 58 |
| FA+EG+H+PP | 110 | / | 37.4 | 4.0 | 1.5 | 1.5 | 0.5 | 58 |
| Ž+EG+H | / | 132 | 72 | 2.0 | 2.0 | 4.6 | / | 58 |
| Ž+EG+H+PP | / | 132 | 72 | 2.0 | 2.0 | 4.6 | 0.5 | 58 |
| Ž+P+H | / | 132 | 72 | 2.0 | 2.0 | 4.6 | / | 11.8 |
| Ž+ES+H | / | 132 | 72 | 2.0 | 2.0 | 4.6 | / | 10 |
| FA+Ž+ES+PB+PP | 50 | 50 | 54 | 0.6 | 0.8 | 0.5 | 0.5 | 60 |
| FA+Ž+EG+PB+PP | 50 | 50 | 54 | 0.6 | 0.8 | 0.5 | 0.5 | 70 |
| FA+Ž+P+PB+PP | 50 | 50 | 54 | 0.6 | 0.8 | 0.7 | 0.5 | 30 |
| FA+Ž+ES+H+PP | 50 | 50 | 54 | 0.6 | 0.8 | 2.0 | 0.5 | 80 |
| FA+Ž+EG+H+PP | 50 | 50 | 54 | 0.6 | 0.8 | 2.0 | 0.5 | 100 |
| FA+Ž+P+H+PP | 50 | 50 | 54 | 0.6 | 0.8 | 2.0 | 0.5 | 40 |
| FA = fly-ash; Ž = slag; EG = expanded clay; PP = polypropylene fibers; PB = sodium perborate; SB = backing soda; ES = expanded glass; P = perlite; H = hydrogen peroxide; T = triton | | | | | | | | |

The samples were cast in silicone moulds and dried for three days in a laboratory dryer at 70 °C and relative humidity of 30 %.
After drying, the following parameters were measured, namely mass, density, and thermal conductivity, which are given in Table 4.

**Table 4: Measurements of hardened materials together with the results of thermal conductivity measurements.**

| **Sample designation** | **Width [mm]** | **Length [mm]** | **Height [mm]** | **Weight [g]** | **Density [kg/m³]** | **Thermal conductivity [mW/mK]** |
|---|---|---|---|---|---|---|
| FA+EG+H | 90.80 | 90.60 | 28.49 | 128.87 | 549.85 | 133.80 |
| FA+EG+H+PP | 70.50 | 76.30 | 21.03 | 64.23 | 567.79 | 140.20 |
| Ž+EG+H | 86.60 | 84.00 | 35.95 | 100.45 | 384.11 | 123.42 |
| Ž+EG+H+PP | 91.80 | 68.30 | 27.21 | 81.20 | 475.95 | 130.39 |
| FA+Ž+ES+PB+PP | 101.95 | 20.40 | 21.60 | 29.93 | 670 | 50* |
| FA+Ž+EG+PB+PP | 101.95 | 21.50 | 20.13 | 30.79 | 700 | 190* |
| FA+Ž+P+PB+PP | 102.00 | 26.00 | 21.43 | 33.62 | 590 | 130* |
| FA+Ž+ES+H+PP | 100.25 | 21.30 | 22.37 | 23.38 | 490 | 120* |
| FA+Ž+EG+H+PP | 100.50 | 21.70 | 29.23 | 30.19 | 470 | 110* |
| FA+Ž+P+H+PP | 103.80 | 21.35 | 25.77 | 25.10 | 440 | 110* |
| FA = fly-ash; Ž = slag; EG = expanded clay; PP = polypropylene fibers; PB = sodium perborate; SB = backing soda; ES = expanded glass; P = perlite; H = hydrogen peroxide; | | | | | | |
| * Generic data obtained from the standard SIST EN 1745 | | | | | | |

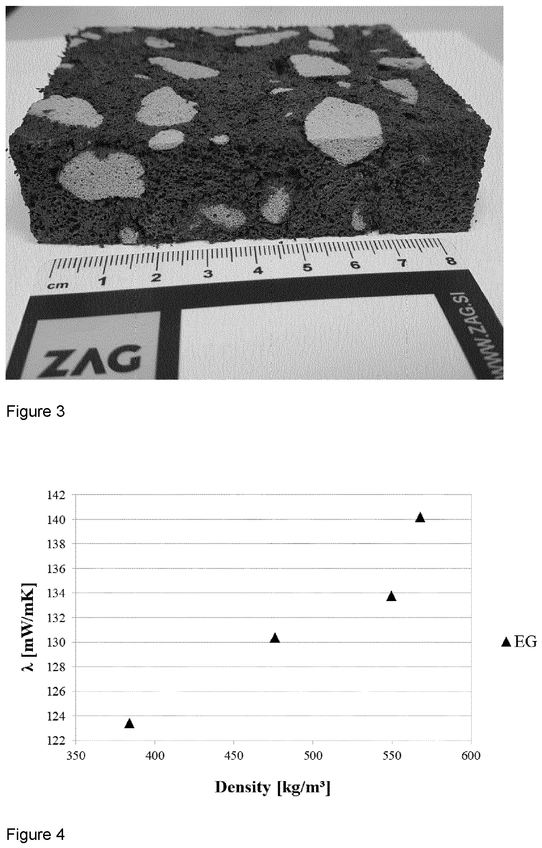

From figure 4 it can be concluded, that there is a relationship between thermal conductivity (measured for samples FA+EG+H; FA+EG+H+PP; Ž+EG+H; Ž+EG+H+PP) and density of the material. Therefore, if we want to improve the thermal insulation properties of the material, we can achieve this by reducing its density. Of course, sufficient compressive (and bending) strengths allowing the material to be manipulated during installation should be taken into account as well.

Additionally, also the mechanical strengths were measured, which are presented in Table 5 and graphically shown in Figure 5. The results reveal that the strength of the samples also decreases with lower density. It is also evident, however, that with the addition of the fibres (in our case polypropylene fibres) the flexural strength of the samples is improved.

**Table 5: Flexural (σ_{FS}) and compressive (σ_{CS}) strength measurements of selected implementation samples.**

| Designation | σ_{FS} [MPa] | σ_{CS} [MPa] |
|---|---|---|
| Ž+ES+H | 0 | 0.85 |
| Ž+EG+H+PP | 0 | 1.04 |
| FA+EG+H+PP | 0.82 | 2.72 |
| FA+Ž+ES+PB+PP | 0.77 | 4.44 |
| FA+Ž+EG+PB+PP | 0.9 | 2.95 |
| FA+Ž+P+PB+PP | 0.29 | 0.61 |
| FA+Ž+ES+H+PP | 0.62 | 3.62 |
| FA+Ž+EG+H+PP | 0.39 | 1.31 |
| FA+Ž+P+H+PP | 0 | 0.95 |
| FA = fly-ash; Ž = slag; EG = expanded clay; PP = polypropylene fibers; PB = sodium perborate; SB = backing soda; ES = expanded glass; P = perlite; H = hydrogen peroxide; σ_{CS} = compressive strength; σ_{FS} = flexural strength | | |

## Claims

1. Alkali-activated lightweight composites comprising:
- 45-60 mass % of a precursor, with a particle size below 90 µm, wherein the precursor is selected from fly-ash or slag or a combination of both
- 15-33 mass % of water glass
- 2-4 mass % of NaOH
- 0.5-1.5 mass % of a stabilizing agent based on active oxygen
- 0.5-1.5 mass % of a surfactant-based stabilizing agent
- 5-50 mass % of a lightweight aggregate with granulation up to 4 mm.

2. Alkali-activated lightweight composites according to claim 1, wherein they additionally comprise from 0.1 to 1 mass % of fibers selected from polypropylene, polyvinyl alcohol, Basalt.

3. Alkali-activated lightweight composites according to claim 1 and 2, wherein the fly-ash comprising at least 40 mass % of Si in the amorphous phase and at least 20 mass % of Al in the amorphous phase, and the slag comprising at least 10 mass % of Si in the amorphous phase and at least 5 mass % of Al in the amorphous phase.

4. Alkali-activated lightweight composites according to the previous claims, wherein the water glass is potassium water glass or sodium water glass, with a dry matter content of up to 55 mass %.

5. Alkali-activated lightweight composites according to the previous claims, wherein the foaming agent is selected from H₂O₂ in the form of a 30 % aqueous solution or sodium perborate in a solid form and/or a baking soda in a solid form.

6. Alkali-activated lightweight composites according to the previous claims, wherein the stabilizing agent is selected from anionic surfactants, for example, sodium dodecyl sulfate in a solid form, or nonionic surfactants, for example, triton in a liquid form.

7. A manufacturing process of the alkali-activated lightweight composites according to claims 1 to 6, wherein the process comprising the use of at least the following ingredients precursor, water glass, NaOH, foaming agent, and stabilizer, and wherein the process comprising the following steps:
a) preparing a dry mixture, wherein the dry mixture includes at least one precursor and wherein the individual components are mixed together in a dry manner to obtain as homogeneous mixture as possible;
b) alkali-activation and stirring to obtain as homogeneous mixture as possible, wherein the alkali-activation involves the addition of said dry mixture to water glass and NaOH and a reaction of dissolving aluminosilicates in alkalis begins followed by redistribution of Si and Al atoms in 2D or 3D network with polycondensation, which is finally cured later in step f) of drying;
c) foaming and homogenizing the mixture, wherein in this step the mixture includes a precursor, water glass, NaOH, foaming agent, and stabilizer and wherein in this step the foaming agent starts to decompose and the gases, also due to the stabilizing agent activity, remain trapped in the structure, and a foaming paste is formed, that is a foam matrix with built-in gas pores;
d) adding a lightweight aggregate to the foam paste until the entire aggregate is surrounded by the paste, to obtain a final mixture;
e) casting of the final mixture into moulds and
f) drying for 2 to 4 days, at a temperature between 60 and 80 °C, and relative humidity between 10 to 60 %,
wherein the steps follow each other sequentially or steps b) and c) take place simultaneously.

8. The process according to claim 7, wherein in the case when the alkali-activated lightweight composites additionally comprising fibers, the fibers are added in the step a) of preparing the dry mixture.

9. The process according to claims 7 and 8, wherein when sodium dodecyl sulphate is used as a stabilizing agent it is added in the step a) of preparing the dry mixture.

10. The process according to claims from 7 to 9, wherein when sodium perborate and/or baking soda is used as a foaming agent, the foaming agent is added in the step a) of preparing the dry mixture, wherein step b) of alkali-activation and step c) of foaming and homogenizing the mixture take place simultaneously.

11. The process according to claims from 7 to 10, wherein when hydrogen peroxide is used as a foaming agent, step c) of foaming and homogenizing the mixture is carried out for a maximum of five minutes.

12. The process according to claims from 7 to 11, wherein the process from step b) of alkali-activation to step e) of casting the final mixture into the moulds takes a maximum of 10 minutes.

13. Use of alkali-activated lightweight composites according to claims from 1 to 6 as an insulating material resistant also at elevated temperatures and used as a conventional building insulation element, as a filler in prefabricated houses, as a filler in fire-resistant doors and partitions, as a filler in noise barriers, as a lining of tunnels, as a lining of industrial devices.
